# EUROPÄISCHE PATENTANMELDUNG

(11) **EP 3 386 116 A1**
(43) Veröffentlichungstag der Anmeldung: **10.10.2018**
(21) Anmeldenummer: 18163181.3
(22) Anmeldetag: 21.03.2018
(51) Int. Cl.: H04B 7/155, H04W 88/04

(54) **SELBSTTÄTIG VERFAHRBARES HAUSHALTSGERÄT**

(30) Priorität: 04.04.2017 DE 102017107181
(71) Anmelder: Miele & Cie. KG, 33332 Gütersloh (DE)
(72) Erfinder: Gerhards, Manfred, 53902 Bad Münstereifel (DE)

(57) **Zusammenfassung**

Die Erfindung betrifft ein selbsttätig verfahrbares Haushaltsgerät (10), mit einem Kommunikationsmodul (14), welches zur Erhöhung der Reichweite eines Funknetzes dazu eingerichtet ist, Signale von einer Basisstation (102) eines drahtlosen Netzwerks zu empfangen und an ein oder mehrere Endgeräte (104a-104c) innerhalb des drahtlosen Netzwerks weiterzusenden, und wobei das Haushaltsgerät (10) dazu eingerichtet ist, abhängig von der Position der Basisstation (102) und/oder der Position des einen oder den Positionen der mehreren Endgeräte (104a-104c) selbsttätig eine Position anzufahren und/oder sich auszurichten, um die Qualität der drahtlosen Verbindung zwischen der Basisstation (102) und dem einen oder den mehreren Endgeräten (104a-104c) zu verbessern.

## Beschreibung

Die Erfindung betrifft ein selbsttätig verfahrbares Haushaltsgerät mit einem Kommunikationsmodul sowie ein System mit einer Basisstation, einem oder mehreren Endgeräten und einem selbsttätig verfahrbaren Haushaltsgerät.

Haushalte verfügen heutzutage üblicherweise über ein drahtloses Netzwerk, wobei eine Basisstation des drahtlosen Netzwerks Signale mit einem oder mehreren Endgeräten, wie beispielsweise Mobiltelefonen oder Tablets, austauscht. Die Basisstation ist dabei häufig als sogenannter WLAN-Access-Point ausgebildet und umfasst sowohl das Modem als auch den Router, sodass die Basisstation das Gateway zum drahtgebundenen Internet darstellt.

Üblicherweise bildet die Basisstation den einzigen physikalischen Zugangspunkt zum Internet in einem Haushalt. Da aber die Strahlungsleistung und somit auch Empfangsstärke mit zunehmender Entfernung von der Basisstation abnimmt, existieren oftmals Bereiche in einer Wohnung oder in einem Haus, innerhalb welcher die Funkverbindung zu der Basisstation beeinträchtigt oder der Aufbau einer entsprechenden Funkverbindung zu der Basisstation nicht möglich ist.

Aufgrund gesetzlicher Vorgaben kann die Sendeleistung solcher Basisstationen auch nicht beliebig erhöht werden, um den Empfangsbereich zu vergrößern. Um diesem Problem zu begegnen, sind aus dem Stand der Technik sogenannte Repeater bekannt, welche üblicherweise Signale von einer Basisstation eines drahtlosen Netzwerks empfangen und an ein oder mehrere Endgeräte innerhalb des drahtlosen Netzwerks weitersenden. Auf diese Weise lässt sich die Reichweite eines Funknetzes vergrößern.

Die bekannten Repeater sind jedoch als stationäre Einzelgeräte ausgebildet. Zur Vergrößerung der Reichweite des Funknetzes ist somit die Anschaffung eines separaten Geräts notwendig, wodurch zusätzlich Kosten anfallen. Außerdem kann die Reichweite des Funknetzes lediglich statisch erhöht werden, sodass eine bedarfsgerechte temporäre Feldstärkenerhöhung in bestimmten Bereichen mit den bekannten Repeatern nicht möglich ist.

Die der Erfindung zugrundeliegende Aufgabe besteht somit darin, die Reichweite von Funknetzen von Haushalten bedarfsgerecht und situationsabhängig erweitern zu können, ohne dass dies die Anschaffung eines stationären Repeater-Einzelgeräts bedingt.

Die Aufgabe wird gelöst durch ein Haushaltsgerät der eingangs genannten Art, wobei das Kommunikationsmodul zur Erhöhung der Reichweite eines Funknetzes dazu eingerichtet ist, Signale von einer Basisstation eines drahtlosen Netzwerks zu empfangen und an ein oder mehrere Endgeräte innerhalb des drahtlosen Netzwerks weiterzusenden, und das Haushaltsgerät dazu eingerichtet ist, abhängig von der Position der Basisstation und/oder der Position des einen oder den Positionen der mehreren Endgeräte selbsttätig eine Position anzufahren und/oder sich auszurichten, um die Qualität der drahtlosen Verbindung zwischen der Basisstation und dem einen oder den mehreren Endgeräten zu verbessern.

Die Erfindung macht sich die Erkenntnis zunutze, dass durch die Integration eines Repeaters in ein selbsttätig verfahrbares Haushaltsgerät die Notwendigkeit eines separaten Repeater-Einzelgeräts überwunden wird und gleichzeitig aufgrund der Mobilität des selbsttätig verfahrbaren Haushaltsgeräts eine bedarfsgerechte und situationsabhängige Erweiterung der Reichweite des Funknetzes umsetzbar ist. Im Sinne der Erfindung ist unter dem Verbessern der Qualität der drahtlosen Verbindung zwischen der Basisstation und dem einen oder den mehreren Endgeräten beispielsweise die Steigerung der Signalstärke der Basisstation für das eine oder die mehreren Endgeräte zu verstehen. Das Kommunikationsmodul ist vorzugsweise gleichzeitig dazu eingerichtet, Signale von dem einen oder den mehreren Endgeräten innerhalb des drahtlosen Netzwerks zu empfangen und an die Basisstation des drahtlosen Netzwerks weiterzusenden. Dabei können aufbereitete und/oder nicht-aufbereitete Signale von dem Haushaltsgerät an die Basisstation und/oder das eine oder die mehreren Endgeräte weiterversendet werden.

In einer besonders bevorzugten Ausführungsform ist das erfindungsgemäße Haushaltsgerät als Reinigungsgerät, insbesondere als Saug-Roboter, ausgebildet. In einer alternativen Ausführungsform kann das Haushaltsgerät auch als Reinigungsgerät ohne Saugfunktion, beispielsweise als Kehrmaschine, ausgebildet sein. Reinigungsgeräte sollen üblicherweise den gesamten Bodenbereich oder einen Großteil des Bodenbereichs eines Haushalts reinigen. Dies bedingt, dass der Bodenbereich von dem Reinigungsgerät abgefahren werden muss. Reinigungsgeräte verfügen somit bereits aufgrund ihrer gerätetypischen Aufgabe über eine Antriebseinrichtung und eine Steuerungseinrichtung, die das Anfahren von unterschiedlichen Positionen und/oder das Ausrichten des Haushaltsgeräts erlauben. Das Erweitern eines Reinigungsgeräts um eine Repeater-Funktion bietet sich aus diesem Grund besonders an.

Das erfindungsgemäße Haushaltsgerät wird ferner dadurch vorteilhaft weitergebildet, dass das Kommunikationsmodul dazu eingerichtet ist, Signale von der Basisstation zu empfangen und an das eine oder die mehreren Endgeräte innerhalb des drahtlosen Netzwerks weiterzusenden, währenddessen das Haushaltsgerät eine gerätetypische Haushaltsaufgabe erledigt. Wenn das Haushaltsgerät als Reinigungsgerät ausgebildet ist, kann die gerätetypische Haushaltsaufgabe beispielsweise das Reinigen, insbesondere das Saugen, eines Bodens sein. Dadurch, dass das Kommunikationsmodul Signale von der Basisstation empfängt und an das eine oder die mehreren Endgeräte innerhalb des drahtlosen Netzwerks weitersendet, währenddessen das Haushaltsgerät eine gerätetypische Haushaltsaufgabe erledigt, wird keine Unterbrechung der Erledigung der gerätetypischen Haushaltsaufgabe durch das Haushaltsgerät durch das Bereitstellen der Repeater-Funktionalität bedingt. Auf diese Weise kann eine Erweiterung der Reichweite des Funknetzes bei gleichzeitiger Erledigung einer gerätetypischen Haushaltsaufgabe durch das Haushaltsgerät erreicht werden.

In einer anderen Ausführungsform ist das erfindungsgemäße Haushaltsgerät dazu eingerichtet, den Fahrweg und/oder die Ausrichtung während der Erledigung der gerätetypischen Haushaltsaufgabe der Position der Basisstation und/oder der Position des einen oder den Positionen der mehreren Endgeräte zur Verbesserung der Qualität der drahtlosen Verbindung zwischen der Basisstation und dem einen oder den mehreren Endgeräten während der Erledigung der gerätetypischen Haushaltsaufgabe durch das Haushaltsgerät anzupassen. Vorzugsweise erledigt das Haushaltsgerät die gerätetypische Aufgabe in Bereichen, in welchen das Haushaltsgerät die Repeater-Funktion für die vorliegende Kombination aus der Basisstation und einem oder mehreren Endgeräten derart umsetzen kann, dass die Signalstärke der Basisstation an der Position des einen oder den Positionen der mehreren Endgeräte stets optimiert ist oder oberhalb eines Grenzwerts liegt. Alternativ oder zusätzlich führt das Haushaltsgerät die gerätetypische Aufgabe in zwei oder mehreren unterschiedlichen Bereichen aus, wobei der Aufenthalt des Haushaltsgeräts in einem oder mehreren Bereichen, welche zu keiner oder lediglich zu einer geringen Signalverbesserung für das eine oder die mehreren Endgeräte führen, verkürzt ist. Somit kann das Haushaltsgerät die zur Erledigung der gerätetypischen Aufgabe notwendigen Fahrten zur Optimierung der Repeater-Funktion anpassen.

In einer Weiterbildung umfasst das erfindungsgemäße Haushaltsgerät eine Auswerteeinheit, welche dazu eingerichtet ist, die Feldstärke der Signale der Basisstation an unterschiedlichen Positionen zu messen und/oder die Position des einen oder die Positionen der mehreren Endgeräte zu bestimmen. Durch die Feldstärkenmessungen kann eine Feldstärkenübersicht für einen geographischen Einsatzbereich des Haushaltsgeräts erzeugt werden. Mittels einer solchen Feldstärkenübersicht lassen sich beispielsweise Dämpfungseinflüsse und/oder Reflektionen von Wänden, Türen, Möbeln oder anderen Gegenständen erfassen. Auf Grundlage solcher Informationen kann beispielsweise das Betriebsverhalten des Haushaltsgeräts angepasst werden.

In einer weiteren Ausführungsform des erfindungsgemäßen Haushaltsgeräts ist die Auswerteeinheit dazu eingerichtet, auf Grundlage der gemessenen Feldstärken der Signale der Basisstation und/oder der bestimmten Position des einen oder den bestimmten Positionen der mehreren Endgeräte einen geeigneten Standort für das Haushaltsgerät zur Erhöhung der Reichweite des Funknetzes zu bestimmen. Durch Verfahren des Haushaltsgeräts an den zuvor bestimmten Standort erfolgt vorzugsweise eine erhebliche Erhöhung der Signalstärke an der Position des einen oder den Positionen der mehreren Endgeräte.

Außerdem ist ein erfindungsgemäßes Haushaltsgerät bevorzugt, welches dazu eingerichtet ist, selbsttätig an den bestimmten Standort zu fahren. Dadurch, dass das Haushaltsgerät dazu eingerichtet ist, selbsttätig an den bestimmten Standort zu fahren, wird eine kontinuierliche und situationsangepasste Erweiterung der Reichweite des Funknetzes umgesetzt. Vorzugsweise ist das Haushaltsgerät dazu eingerichtet, beim Bewegen in Richtung des bestimmten Standorts eine Fahrstrecke zu wählen, bei welcher die Signalstärke an der Position des einen oder den Positionen der mehreren Endgeräte optimiert ist. Dies kann insbesondere auch eine Fahrstrecke sein, welche von der schnellsten oder kürzesten Fahrstrecke zu dem bestimmten Standort abweicht.

In einer vorteilhaften Ausführungsform des erfindungsgemäßen Haushaltsgeräts ist die Auswerteeinheit dazu eingerichtet, den geeigneten Standort des Haushaltsgeräts derart zu bestimmen, dass die Empfangsstärke eines priorisierten Endgeräts innerhalb des drahtlosen Netzwerks gesteigert ist und/oder derart, dass die Empfangsstärke mehrerer oder sämtlicher Endgeräte innerhalb des drahtlosen Netzwerks gesteigert ist. Dadurch, dass der geeignete Standort des Haushaltsgeräts derart bestimmt wird, dass die Empfangsstärke eines priorisierten Endgeräts innerhalb des drahtlosen Netzwerks gesteigert ist, kann eine "Follow-Me"-Funktion umgesetzt werden, bei welcher das Haushaltsgerät dem priorisierten Endgerät mit einem gewissen Abstand folgt, um eine Optimierung der Signalstärke an der Position des priorisierten Endgeräts zu erreichen. Vorzugsweise ist das Haushaltsgerät mit einer Ladestation für das Haushaltsgerät verbindbar, wobei die Repeater-Funktionalität mit oder ohne Verbindung des Haushaltsgeräts zu dessen Ladestation umsetzbar ist. Wenn keine Verbindung zur Ladestation vorhanden ist, wird das Kommunikationsmodul durch den Energiespeicher des Haushaltsgeräts mit Leistung versorgt. Wenn eine Verbindung zur Ladestation vorhanden ist, wird das Kommunikationsmodul über die Ladestation mit Leistung versorgt und/oder der Energiespeicher des Haushaltsgeräts geladen.

Bevorzugt ist außerdem ein erfindungsgemäßes Haushaltsgerät, bei welchem die Auswerteeinheit dazu eingerichtet ist, auf Grundlage der gemessenen Feldstärken der Signale der Basisstation einen geeigneten Standort für die Ladestation des Haushaltsgeräts zu bestimmen. Durch die Auswahl eines geeigneten Standorts für die Ladestation des Haushaltsgeräts kann beispielsweise während des Ladens des Energiespeichers des Haushaltsgeräts eine Optimierung der Signalstärke an Positionen erreicht werden, an welchen besonders häufig Endgeräte benutzt werden, beispielsweise im Bereich eines Schreibtisches, eines Bettes oder eines Sofas. Somit ist auch während des Aufladevorgangs des Haushaltsgeräts in diesen Bereichen eine ausreichende Signalstärke gewährleistet.

In einer Weiterbildung ist das erfindungsgemäße Haushaltsgerät dazu eingerichtet, selbsttätig an eine vordefinierte Position zu fahren, wenn ein vordefiniertes Ereignis eintritt, wobei die vordefinierte Position von der Ladestation des Haushaltsgeräts beabstandet ist. Das vordefinierte Ereignis kann die Aktivierung des Haushaltsgeräts oder die Erfassung eines Endgeräts innerhalb oder außerhalb eines definierten Bereichs sein. Beispielsweise ist das Haushaltsgerät dazu eingerichtet, selbsttätig in einen an eine Terrasse oder einen Balkon angrenzenden Bereich oder in einen Fensterbereich zu fahren, wenn das Haushaltsgerät ein oder mehrere Endgeräte auf der Terrasse, dem Balkon oder außerhalb einer Wohnung oder eines Hauses vor dem Fenster erfasst. Das Haushaltsgerät kann beispielsweise dazu eingerichtet sein, sich innerhalb eines für das Haushaltsgerät erreichbaren Bereichs derart zu positionieren, dass die Signalstärke in einem Bereich, welcher für das Haushaltsgerät nicht erreichbar ist, erhöht ist. Somit kann beispielsweise die Signalstärke im Außenbereich einer Wohnung oder eines Hauses gesteigert werden.

Das erfindungsgemäße Haushaltsgerät wird außerdem dadurch vorteilhaft weitergebildet, dass die Auswerteeinheit dazu eingerichtet ist, einen Bereich hinsichtlich vorhandener Feldstärken und der Kanalbelegung zu untersuchen und vorzugsweise auf Grundlage der untersuchten Feldstärken und Kanalbelegungen einen geeigneten Standort für die Basisstation des drahtlosen Netzwerks zu bestimmen. Die Auswahl eines geeigneten Standorts für die Basisstation kann zu einer erheblichen Erweiterung der Reichweite des Funknetzes führen. Externe Beeinträchtigungen, wie etwa andere Funknetze, oder bauliche Gegebenheiten, wie die Anordnung und die Beschaffenheit von Wänden oder Mauern, können dazu führen, dass bestimmte Bereiche sich in besonderem Maße und andere Bereiche sich lediglich bedingt als Standort für die Basisstation eignen. Das erfindungsgemäße Haushaltsgerät erlaubt durch die Untersuchung von Feldstärken und Kanalbelegung die Auswahl eines Standorts für die Basisstation, welcher unter Berücksichtigung der vorliegenden Gegebenheiten zu einer Erweiterung der Reichweite des Funknetzes führt.

In einer anderen Ausführungsform ist das erfindungsgemäße Haushaltsgerät dazu eingerichtet, Funknetzinformationen über eine Anzeige bereitzustellen und/oder an ein Endgerät zur Anzeige durch das Endgerät zu senden. Das Haushaltsgerät kann darüber hinaus auch über ein Endgerät, insbesondere über eine entsprechende Anwendung auf dem Endgerät, einstellbar beziehungsweise konfigurierbar sein. Es können beispielsweise topographische Karten zur Feldstärkenverteilung durch das Haushaltsgerät angezeigt und/oder versendet werden.

In einer Weiterbildung des erfindungsgemäßen Haushaltsgeräts weist das Kommunikationsmodul eine oder mehrere Antennen auf, wobei eine oder mehrere Antennen vorzugsweise eine Richtcharakteristik aufweisen. Insbesondere weist eine oder weisen mehrere Antennen eine ausgeprägte Keulencharakteristik auf. Durch die Verwendung von einer oder mehreren Antennen mit einer Richtcharakteristik kann die Reichweite des Funknetzes in eine bestimmte Richtung erhöht werden, ohne die gesetzlich limitierte Sendeleistung zu überschreiten. Da die Position der Basisstation und die Position des einen oder die Positionen der mehreren Endgeräte bekannt sind, ist eine rundum gleichmäßige Sende- und/oder Empfangscharakteristik nicht notwendig, da in Bereichen, in denen kein Endgerät positioniert ist, eine geringe Feldstärke vorliegen kann. Vorzugsweise ist zumindest eine Antenne nicht als Dipolantenne ausgebildet.

Bevorzugt ist darüber hinaus ein erfindungsgemäßes Haushaltsgerät, welches dazu eingerichtet ist, sich und/oder eine oder mehrere Antennen des Kommunikationsmoduls unter Berücksichtigung der Position der Basisstation, der Position des einen oder der Positionen der mehreren Endgeräte und/oder der Richtcharakteristik der einen oder der mehreren Antennen auszurichten. Vorzugsweise weist das Haushaltsgerät eine Ausrichtaktuatorik für eine oder mehrere Antennen auf. Auf diese Weise lässt sich beispielsweise ein Haushaltsgerät umsetzen, bei welcher eine erste Antenne mit einer ausgeprägten Keulencharakteristik durch Verfahren und/oder Drehen des gesamten Haushaltsgeräts ausgerichtet wird und eine zweite Antenne mit einer ausgeprägten Keulencharakteristik mittels der Ausrichtaktuatorik unabhängig von der ersten Antenne ausgerichtet wird. Beispielsweise ist dabei eine der Antennen auf die Basisstation und die andere Antenne auf ein oder mehrere Endgeräte ausgerichtet.

Die der Erfindung zugrundeliegende Aufgabe wird ferner durch ein System der eingangs genannten Art gelöst, wobei das Haushaltsgerät nach einer der vorstehend beschriebenen Ausführungsformen ausgebildet ist. Hinsichtlich der Vorteile und Modifikationen des erfindungsgemäßen Systems wird zunächst auf die Vorteile und Modifikationen des erfindungsgemäßen Haushaltsgeräts verwiesen. Vorzugsweise ist die Basisstation als WLAN-Router ausgebildet. Alternativ oder zusätzlich ist ein oder sind mehrere Endgeräte als Mobiltelefon, Tablet, Laptop, Personal Computer oder Smartwatch ausgebildet.

Weitere Merkmale und Details der Erfindung sind der nachfolgenden Figurenbeschreibung und den Ansprüchen zu entnehmen. Es zeigen
- Fig. 1: ein Ausführungsbeispiel des erfindungsgemäßen Haushaltsgeräts in einer perspektivischen Darstellung;
- Fig. 2: ein Ausführungsbeispiel des erfindungsgemäßen Systems in einem ersten Zustand in einer schematischen Darstellung;
- Fig. 3: das in der Fig. 2 dargestellte erfindungsgemäße System in einem zweiten Zustand; und
- Fig. 4: das in der Fig. 2 dargestellte erfindungsgemäße System in einem dritten Zustand.

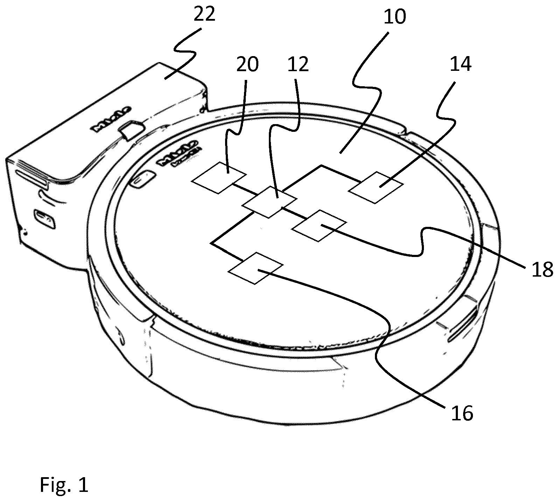

Fig. 1 zeigt ein als Saug-Roboter ausgebildetes selbsttätig verfahrbares Haushaltsgerät 10. Das Haushaltsgerät 10 umfasst eine Steuerungseinrichtung 12, ein Kommunikationsmodul 14, eine Auswerteeinheit 16, eine Bedieneinrichtung 18 und eine Anzeige 20, wobei das Kommunikationsmodul 14, die Auswerteeinheit 16, die Bedieneinrichtung 18 und die Anzeige 20 signalleitend mit der Steuerungseinrichtung 12 verbunden sind.

Das Kommunikationsmodul 14 ist zur Erhöhung der Reichweite eines Funknetzes dazu eingerichtet, Signale von einer Basisstation (nicht dargestellt) eines drahtlosen Netzwerks zu empfangen und an ein oder mehrere Endgeräte (nicht dargestellt) innerhalb des drahtlosen Netzwerks weiterzusenden. Außerdem ist das Kommunikationsmodul 14 dazu eingerichtet, Signale von einem oder mehreren Endgeräten innerhalb des drahtlosen Netzwerks zu empfangen und an die Basisstation des drahtlosen Netzwerks weiterzusenden. Hierdurch verfügt das Haushaltsgerät 10 über eine sogenannte Repeater-Funktionalität. Darüber hinaus ist das Haushaltsgerät 10 dazu eingerichtet, abhängig von der Position der Basisstation und Position des einen oder den Positionen der mehreren Endgeräte selbsttätig eine Position anzufahren und sich auszurichten, um die Qualität der drahtlosen Verbindung zwischen der Basisstation und dem einen oder den mehreren Endgeräten zu verbessern.

Das Kommunikationsmodul 14 umfasst zwei Antennen, wobei beide Antennen eine Richtcharakteristik, nämlich eine ausgeprägte Keulencharakteristik, aufweisen. Das Haushaltsgerät 10 ist dazu eingerichtet, sich unter Berücksichtigung der Position der Basisstation und der Richtcharakteristik einer ersten Antenne auszurichten. Ferner ist das Haushaltsgerät 10 dazu eingerichtet, eine zweite Antenne mittels einer Ausrichtaktuatorik unter Berücksichtigung der Position des einen oder der Positionen der mehreren Endgeräte und der Richtcharakteristik der zweiten Antenne auszurichten.

Die Auswerteeinheit 16 ist dazu eingerichtet, die Feldstärke der Signale der Basisstation an unterschiedlichen Positionen zu messen, die Position des einen oder die Positionen der mehreren Endgeräte zu bestimmen und auf Grundlage der gemessenen Feldstärken der Signale der Basisstation und der bestimmten Position des einen oder den bestimmten Positionen der mehreren Endgeräte einen geeigneten Standort für das Haushaltsgerät 10 zur Erhöhung der Reichweite des Funknetzes zu bestimmen. Über die Steuerungseinrichtung 12 wird nach der Bestimmung des geeigneten Standorts für das Haushaltsgerät 10 ein Steuerungsbefehl an eine Antriebseinheit (verdeckt) des Haushaltsgeräts gesendet, welcher das Haushaltsgerät dazu veranlasst, selbsttätig an den zuvor bestimmten Standort zu fahren.

Die Bedieneinrichtung 18 umfasst ein oder mehrere Bedienelemente, welche von einem Benutzer des Haushaltsgeräts 10 manuell betätigt werden können. Beispielsweise ist das eine oder sind die mehreren Bedienelemente als drucksensitive Bedienelemente ausgebildet, wobei die drucksensitiven Bedienelemente Tasten, Knöpfe, Schalter und/oder einen Touchscreen umfassen können. Über die Betätigung der Bedieneinrichtung 18 kann beispielsweise ein Betriebsmodus des Haushaltsgeräts 10 ausgewählt oder Geräteeinstellungen geändert werden.

Die Anzeige 20 umfasst ein Display und ist dazu eingerichtet, dem Benutzer Informationen graphisch darzustellen. Dabei können dem Benutzer über die Anzeige 20 auch Funknetzinformationen, wie beispielsweise topographische Karten zur Feldstärkenverteilung, bereitgestellt werden.

Die erstellte Karte der Feldstärkeverteilung innerhalb der Wohnung kann auch zur Positionsbestimmung des Haushaltsgeräts 10 genutzt werden und/oder zur Verbesserung der internen Positionsbestimmung mit anderen Mitteln. Ist außer der Basisstation 102 mindestens ein weiteres stationäres WLAN-Gerät empfangbar, beispielsweise eine Basisstation eines Nachbarn, so kann die Positionsbestimmung mittels Triangulation durchgeführt bzw. verbessert werden. So kann auch die bestimmungsgemäße Funktion des Haushaltsgeräts verbessert werden, da mit einer präziseren Navigation auch die Reinigungseffizienz gesteigert werden kann.

Das Haushaltsgerät 10 weist in dem dargestellten Zustand eine Verbindung zu einer Ladestation 22 auf, über welche der Energiespeicher des Haushaltsgeräts 10 aufgeladen wird.

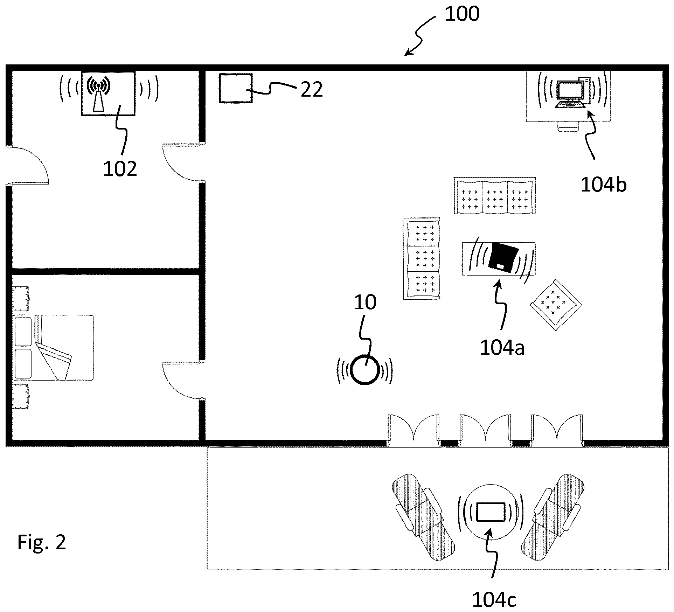

Fig. 2 zeigt ein System 100 mit einer Basisstation 102, drei unterschiedlichen Endgeräten 104a-104c und einem Haushaltsgerät 10. Die Basisstation 102 ist als WLAN-Router ausgebildet und in einem separaten Raum positioniert. Das Endgerät 104a ist ein Laptop, welcher auf einem Tisch in einem Wohnbereich positioniert ist. Das Endgerät 104b ist ein Personal Computer, welcher auf einem Schreibtisch in dem Wohnbereich positioniert ist. Das Endgerät 104c ist ein Tablet, welcher auf einem Tisch auf einem Balkon positioniert ist. Das Haushaltsgerät 10 kann beispielsweise das in der Fig. 1 dargestellte Haushaltsgerät 10 sein.

Das Haushaltsgerät 10 ist dazu eingerichtet, auf Grundlage von gemessenen Feldstärken der Signale der Basisstation 102 und der zuvor bestimmten Positionen der Endgeräte 104a-104c einen geeigneten Standort für das Haushaltsgerät 10 zur Erhöhung der Reichweite eines Funknetzes zu bestimmen, wobei der geeignete Standort des Haushaltsgeräts 10 derart bestimmt wird, dass die Empfangsstärke des priorisierten Endgeräts 104c gesteigert ist. Dadurch, dass der geeignete Standort des Haushaltsgeräts 10 derart bestimmt wird, dass die Empfangsstärke des priorisierten Endgeräts 104c gesteigert ist, wird eine "Follow-Me"-Funktion für das Endgerät 104c umgesetzt.

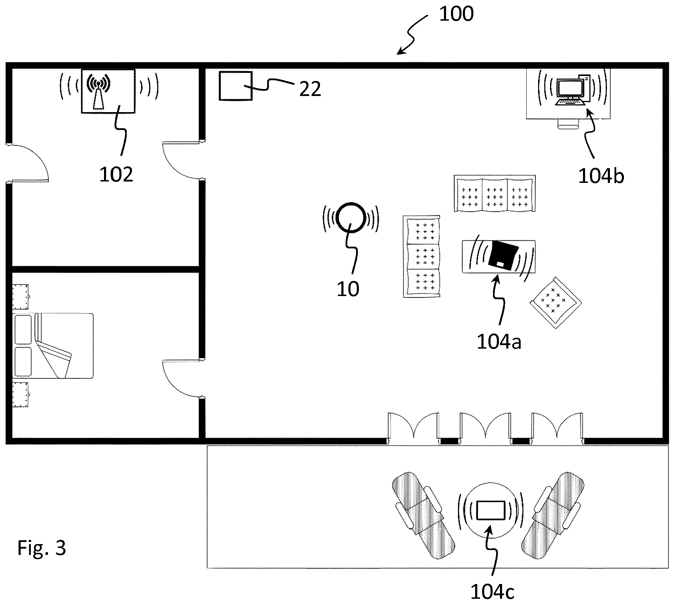

Bei dem in Fig. 3 dargestellten Zustand wurden die Positionen der Endgeräte 104a-104c im Vergleich zu dem in Fig. 2 dargestellten Zustand nicht verändert. Jedoch befindet sich das Haushaltsgerät 10 an einer anderen Position innerhalb des gezeigten Wohnbereichs. Durch eine Umstellung des Betriebsmodus des Haushaltsgeräts 10 wurde hier der geeignete Standort des Haushaltsgeräts 10 derart durch das Haushaltsgerät 10 bestimmt, dass die Empfangsstärke sämtlicher Endgeräte 104a-104c innerhalb des drahtlosen Netzwerks gesteigert ist. Dadurch, dass die Empfangsstärke sämtlicher Endgeräte 104a-104c innerhalb des drahtlosen Netzwerks gesteigert ist, können diese gleichzeitig von unterschiedlichen Benutzern genutzt werden.

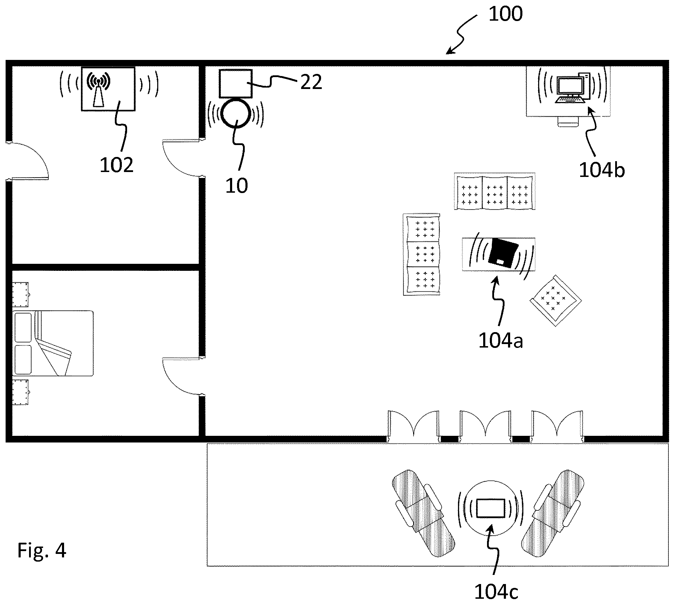

Fig. 4 zeigt das Haushaltsgerät 10 im Bereich der Ladestation 22. In dem dargestellten Zustand besteht eine Verbindung zwischen dem Haushaltsgerät 10 und der Ladestation 22, sodass das Kommunikationsmodul des Haushaltsgeräts 10 über die Ladestation 22 mit Leistung versorgt und der Energiespeicher des Haushaltsgeräts 10 geladen wird. Die Repeater-Funktionalität des Haushaltsgeräts 10 kann grundsätzlich mit oder ohne Verbindung des Haushaltsgeräts 10 zu der Ladestation 22 umgesetzt werden. Wenn keine Verbindung zur Ladestation 22 vorhanden ist, wird das Kommunikationsmodul durch den Energiespeicher des Haushaltsgeräts 10 mit Leistung versorgt.

Außerdem kann die Repeater-Funktionalität des Haushaltsgeräts 10 auch während der Erledigung der gerätetypischen Haushaltsaufgabe durch das Haushaltsgerät 10 umgesetzt werden. Da es sich bei dem dargestellten Haushaltsgerät 10 um einen Saug-Roboter handelt, stellt die gerätetypische Haushaltsaufgabe des Haushaltsgeräts 10 das Saugen der Bodenfläche des dargestellten Wohnbereichs dar. Somit ist das Haushaltsgerät 10 also dazu eingerichtet, Signale von der Basisstation 102 zu empfangen und an die Endgeräte 104a-104c innerhalb des drahtlosen Netzwerks weiterzusenden, währenddessen das Haushaltsgerät 10 die gerätetypische Haushaltsaufgabe erledigt. Darüber hinaus ist das Haushaltsgerät 10 dazu eingerichtet, den Fahrweg während der Erledigung der gerätetypischen Haushaltsaufgabe der Position der Basisstation 102 und den Positionen der Endgeräte 104a-104c zur Verbesserung der Qualität der drahtlosen Verbindung zwischen der Basisstation 102 und den Endgeräten 104a-104c während der Erledigung der gerätetypischen Haushaltsaufgabe durch das Haushaltsgerät 10 anzupassen.

### Bezugszeichenliste

- 10: Haushaltsgerät
- 12: Steuerungseinrichtung
- 14: Kommunikationsmodul
- 16: Auswerteeinheit
- 18: Bedieneinrichtung
- 20: Anzeige
- 22: Ladestation

- 100: System
- 102: Basisstation
- 104a-104c: Endgeräte

## Patentansprüche

1. Selbsttätig verfahrbares Haushaltsgerät (10), mit
- einem Kommunikationsmodul (14),
**dadurch gekennzeichnet, dass** das Kommunikationsmodul (14) zur Erhöhung der Reichweite eines Funknetzes dazu eingerichtet ist, Signale von einer Basisstation (102) eines drahtlosen Netzwerks zu empfangen und an ein oder mehrere Endgeräte (104a-104c) innerhalb des drahtlosen Netzwerks weiterzusenden, und dadurch, dass das Haushaltsgerät (10) dazu eingerichtet ist, abhängig von der Position der Basisstation (102) und/oder der Position des einen oder den Positionen der mehreren Endgeräte (104a-104c) selbsttätig eine Position anzufahren und/oder sich auszurichten, um die Qualität der drahtlosen Verbindung zwischen der Basisstation (102) und dem einen oder den mehreren Endgeräten (104a-104c) zu verbessern.

2. Haushaltsgerät (10) nach Anspruch 1,
**dadurch gekennzeichnet, dass** das Haushaltsgerät (10) als Reinigungsgerät, insbesondere als Saug-Roboter, ausgebildet ist.

3. Haushaltsgerät (10) nach Anspruch 1 oder 2,
**dadurch gekennzeichnet, dass** das Kommunikationsmodul (14) dazu eingerichtet ist, Signale von der Basisstation (102) zu empfangen und an das eine oder die mehreren Endgeräte (104a-104c) innerhalb des drahtlosen Netzwerks weiterzusenden, währenddessen das Haushaltsgerät (10) eine gerätetypische Haushaltsaufgabe erledigt.

4. Haushaltsgerät (10) nach Anspruch 3,
**dadurch gekennzeichnet, dass** das Haushaltsgerät (10) dazu eingerichtet ist, den Fahrweg und/oder die Ausrichtung während der Erledigung der gerätetypischen Haushaltsaufgabe der Position der Basisstation (102) und/oder der Position der einen oder den Positionen der mehreren Endgeräte (104a-104c) zur Verbesserung der Qualität der drahtlosen Verbindung zwischen der Basisstation (102) und dem einen oder den mehreren Endgeräten (104a-104c) während der Erledigung der gerätetypischen Haushaltsaufgabe durch das Haushaltsgerät (10) anzupassen.

5. Haushaltsgerät (10) nach einem der vorstehenden Ansprüche,
**gekennzeichnet durch** eine Auswerteeinheit (16), welche dazu eingerichtet ist, die Feldstärke der Signale der Basisstation (102) an unterschiedlichen Positionen zu messen und/oder die Position des einen oder die Positionen der mehreren Endgeräte (104a-104c) zu bestimmen.

6. Haushaltsgerät (10) nach Anspruch 5,
**dadurch gekennzeichnet, dass** die Auswerteeinheit (16) dazu eingerichtet ist, auf Grundlage der gemessenen Feldstärken der Signale der Basisstation (102) und/oder der bestimmten Position des einen oder der bestimmten Positionen der mehreren Endgeräte (104a-104c) einen geeigneten Standort für das Haushaltsgerät (10) zur Erhöhung der Reichweite des Funknetzes zu bestimmen.

7. Haushaltsgerät (10) nach Anspruch 6,
**dadurch gekennzeichnet, dass** das Haushaltsgerät (10) dazu eingerichtet ist, selbsttätig an den bestimmten Standort zu fahren.

8. Haushaltsgerät (10) nach Anspruch 6 oder 7,
**dadurch gekennzeichnet, dass** die Auswerteeinheit (16) dazu eingerichtet ist, den geeigneten Standort des Haushaltsgeräts (10) derart zu bestimmen, dass die Empfangsstärke eines priorisierten Endgeräts (104a-104c) innerhalb des drahtlosen Netzwerks gesteigert ist und/oder derart, dass die Empfangsstärke mehrerer oder sämtlicher Endgeräte (104a-104c) innerhalb des drahtlosen Netzwerks gesteigert ist.

9. Haushaltsgerät (10) nach einem der Ansprüche 6 bis 8,
**dadurch gekennzeichnet, dass** die Auswerteeinheit (16) dazu eingerichtet ist, auf Grundlage der gemessenen Feldstärken der Signale der Basisstation (102) einen geeigneten Standort für die Ladestation (22) des Haushaltsgeräts (10) zu bestimmen.

10. Haushaltsgerät (10) nach einem der vorstehenden Ansprüche,
**dadurch gekennzeichnet, dass** das Haushaltsgerät (10) dazu eingerichtet ist, selbsttätig an eine vordefinierte Position zu fahren, wenn ein vordefiniertes Ereignis eintritt, wobei die vordefinierte Position beabstandet von der Ladestation (22) des Haushaltsgeräts (10) ist.

11. Haushaltsgerät (10) nach einem der vorstehenden Ansprüche,
**dadurch gekennzeichnet, dass** die Auswerteeinheit (16) dazu eingerichtet ist, einen Bereich hinsichtlich vorhandener Feldstärken und der Kanalbelegung zu untersuchen und vorzugsweise auf Grundlage der untersuchten Feldstärken und Kanalbelegungen einen geeigneten Standort für die Basisstation (102) des drahtlosen Netzwerks zu bestimmen.

12. Haushaltsgerät (10) nach einem der vorstehenden Ansprüche,
**dadurch gekennzeichnet, dass** das Haushaltsgerät (10) dazu eingerichtet ist, Funknetzinformationen über eine Anzeige (20) bereitzustellen und/oder an ein Endgerät (104a-104c) zur Anzeige durch das Endgerät (104a-104c) zu senden.

13. Haushaltsgerät (10) nach einem der vorstehenden Ansprüche,
**dadurch gekennzeichnet, dass** das Kommunikationsmodul (14) eine oder mehrere Antennen aufweist, wobei eine oder mehrere Antennen vorzugsweise eine Richtcharakteristik aufweisen.

14. Haushaltsgerät (10) nach Anspruch 13,
**dadurch gekennzeichnet, dass** das Haushaltsgerät (10) dazu eingerichtet ist, sich und/oder eine oder mehrere Antennen des Kommunikationsmoduls (14) unter Berücksichtigung der Position der Basisstation (102), der Position des einen oder der Positionen der mehreren Endgeräte (104a-104c) und/oder der Richtcharakteristik der einen oder der mehreren Antennen auszurichten.

15. System (100), mit
- einer Basisstation (102);
- einem oder mehreren Endgeräten (104a-104c); und
- einem Haushaltsgerät (10);
**dadurch gekennzeichnet, dass** das Haushaltsgerät (10) nach einem der vorstehenden Ansprüche ausgebildet ist.
